(19) Europäisches Patentamt
European Patent Office
Office européen des brevets

(11) **EP 4 516 735 A1**

(12) **EUROPEAN PATENT APPLICATION**

(43) Date of publication:
05.03.2025 Bulletin 2025/10

(21) Application number: 23306432.8

(22) Date of filing: 30.08.2023

(51) International Patent Classification (IPC):
*C01B 32/05* (2017.01)    *H01M 4/62* (2006.01)
*H01M 10/0525* (2010.01)

(52) Cooperative Patent Classification (CPC):
**C01B 32/05; C09C 1/48; C09C 1/56; H01M 4/505;**
**H01M 4/525; H01M 4/625; H01M 10/0525;**
C01P 2006/12; C01P 2006/16; C01P 2006/19;
C01P 2006/90; H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Imertech**
**75015 Paris (FR)**

(72) Inventor: **The designation of the inventor has not yet been filed**

(74) Representative: **Santarelli**
**Tour Trinity**
**1 bis Esplanade de la Défense**
**92035 Paris La Défense Cedex (FR)**

(54) **HIGHLY CONDUCTIVE MESOPOROUS CARBON BLACKS**

(57)    The present invention relates to Conductive Carbon Black (CCB) materials with an optimized prosity distribution, in particular an optimized micro- and meso-porosity distribution. This in improved performance as conductive agent or additive for example in Li-ion battery applications. Further, the application relates to improved Li-ion batteries characterized by a low direct contact resistance (DCR).

**Figure 2**

**Description**

## FIELD OF THE DISCLOSURE

The present invention relates to Conductive Carbon Black (CCB) materials with an optimized micro- and mesoporosity distribution resulting in improved performance as conductive agent or additive for example in Li-ion battery applications.

Further, Li-ion batteries with low direct contact resistance comprising the advantageous carbonaceous particulate materials according to the invention are provided. Finally, methods for making the carbonaceous particulate materials of the invention are disclosed herein.

## BACKGROUND

Carbon Black generally refers to certain materials produced by the incomplete combustion of carbon-based materials and is characterized as para-crystalline carbonaceous material. Depending on their properties, Carbon Black materials have found application in a wide variety of industries, spanning from additives in rubber preparations to fuel cells and lithium-ion batteries (Li-ion batteries). Exemplary carbon blacks include oil furnace blacks, acetylene black, extra-conductive blacks, and graphitized versions thereof, while exemplary commercially available carbon blacks include Akzo Nobel Ketjen EC300J, Cabot Vulcan XC72R, and Denka Acetylene Black. Conductive Carbon Black (CCB) materials are the most common conductive additive for Li-ion battery electrodes.

Conductive Carbon Blacks are a highly specialized products that differ from commodity Carbon Black materials due to their unique structure. Generally, Carbon Black materials are characterized by parameters that can span over a wide range, such as surface area, oil absorption characteristics, surface chemistry, primary particle size, aggregate size, agglomerate size, and porosity. The porosity of Carbon Black materials is further distinguished in microporosity, mesoporosity, and macroporosity. Generally, and as used herein, micropore size is accepted as referring to pores with below 2 nm (or 20 Angström) diameter, mesopore size is referring to pores with 2 to 50 nm (or 20 to 500 Angström) diameter, while macropores refer to pores with diameters bigger than 50 nm (or 500 Angström). The definition of porosity follows the IUPAC classifications (see PAC, 1972, 31, 577, p. 585-586, point 1.1.5).

Suitable CCB materials should enable low direct contact resistance (DCR) in downstream products such as electrodes utilizing them. CCB materials mainly consist of primary particles that are fused together forming chains assembled in a branched network, also known as aggregate structure. CCB primary particle size is considered an important feature for achieving high conductivity in Li-Ion batteries. For example, the lower the primary particle size, the higher the Braun-Emmett-Teller specific surface area (BET SSA), and the better the battery performance. Several companies have followed this principle to offer higher conductivity CCB in the Li-ion market.

Certain Carbon Black parameters such as, for example, the BET SSA can suitably be modified by various treatment steps to better fit the intended use. For example, while graphitization treatments generally serve to reduce surface area, activation treatments can increase the porosity and surface area of the treated carbon black materials. Porous carbonaceous particulate materials have attracted attention for various academic and industrial applications.

For example, WO 2013/045894 describes electrically conducting microporous carbon support materials with good corrosion resistance. US 9 017 837 B2 discloses a method of making high surface area graphitized carbon with a c/2 of less than 0.3500.

In light of the above, there is a need for improved and optimized conductive carbon black materials, especially for materials that provide access to electrodes with a low direct contact resistances for use in Li-ion battery applications. In particular, the present inventors set out to further explore the correlation between optimal Conductive Carbon Black micro- and mesoporosity distribution and improved performance as conductive agent in Li-ion Battery applications.

## SUMMARY OF THE INVENTION

The present inventors have surprisingly found that by carefully tuning the ratio of surface area attributed to micro- and mesopores advantageous CCB materials are obtained, that are able to further improve Li-ion batteries when used as conductive additive. It has been discovered that next to previously known parameters affecting Li-ion battery performance like total BET SSA, the porosity distribution of CCB materials and therefore the surface area of pores within a certain size within said CCB materials is a key contributing factor to be optimized towards improved battery performance and better electrode processing.

Moreover, it was surprisingly discovered that such inventive CCB materials with optimized porosity distribution can not only be obtained by the *de novo* synthesis from carbon feedstock with high aromaticity, but also by subjecting commercial carbon black materials outside the optimal porosity distribution range to two distinct post-treatment processes, dependent on whether their BET SSA is considered too high, or too low.

Accordingly, in the first aspect of the present invention a carbonaceous particulate material is disclosed, which is characterized by a BET SSA of between about 150 $m^2$/g to about 700 $m^2$/g, a ratio of micropore area, understood as pore area in pores with a diameter below 2 nm, to mesopore area, understood as pore area in pores with a diameter between 2 nm and 50 nm) of at most about 0.40, a mesopore area above about 150 $m^2$/g.

In the second aspect, the present invention relates to a cathode slurry composition, suitable for the production of cathodes for Li-ion batteries. The cathode slurry comprises the advantageous carbonaceous particulate material according to the invention, an active lithium material, a binder, and a solvent.

Subsequently, the invention relates in the third aspect to a cathode formed by applying the cathode slurry of the second aspect to a substrate and subsequently drying the coated substrate at a temperature of at least 100 °C for 5 minutes.

In the fourth aspect of the invention, Li-ion batteries comprising the cathode of the third aspect of the invention and/or the advantageous carbonaceous particulate material according to the invention are described.

Moreover, the invention relates to three distinct methodologies for arriving at the inventive carbonaceous particulate materials: A post-treatment process of a low-BET carbonaceous particulate material feed (BET SSA < 140 $m^2$/g) by activation, a post-treatment process of a high-BET carbonaceous particulate material feed (BET SSA > 600 $m^2$/g and < 1500 $m^2$/g) by graphitization, and a *de novo* synthesis process.

Accordingly, in a fifth aspect of the invention discloses a process for producing the carbonaceous particulate material according to the invention, comprising subjecting a low-BET carbonaceous particulate material feed with a BET SSA of below about 140 $m^2$/g to a reactive process gas at a temperature from about 800 °C to about 1200 °C and a pressure from atmospheric pressure to about 80 bar for about 10 minutes up to about 600 minutes.

Similarly, in a sixth aspect of the invention, a process for producing the carbonaceous particulate material according to the invention is disclosed, comprising subjecting a high-BET carbonaceous particulate material feed with a BET SSA of between about 600 $m^2$/g and about 1500 $m^2$/g to an inert process gas at a temperature from about 900 °C to about 2200 °C and a pressure from atmospheric pressure to about 80 bar for about 10 minutes up to about 600 minutes.

Finally, the seventh aspect of the invention relates to a process for directly obtaining the carbonaceous particulate materials according to the invention, comprising a thermal-oxidative decomposition by feeding hydrocarbons with high degree of aromaticity together with sub-stoichiometric amounts of air and/or steam into a reactor, thereby causing the decomposition of the gasified hydrocarbons at a temperature of between about 1000°C and about 1600°C, for instance from 1400 and 1500 °C or from 1450 to 1550°C, and forming the carbon black materials in the presence of oxidative species such as $O_2$, $CO_2$, $H_2O$, or mixtures thereof

## BRIEF DESCRIPTION OF THE DRAWINGS

The present disclosure will be more readily appreciated by reference to the following detailed description when being considered in connection with the accompanying drawings:

Figure 1 visualizes the correlation between BET SSA of the CCB material and the direct contact resistance (DCR) of the tested Li-Ion batteries.

Figure 2 demonstrates the evolution of the DCR of the tested Li-Ion batteries with rising mesopores surface area of the CCB material.

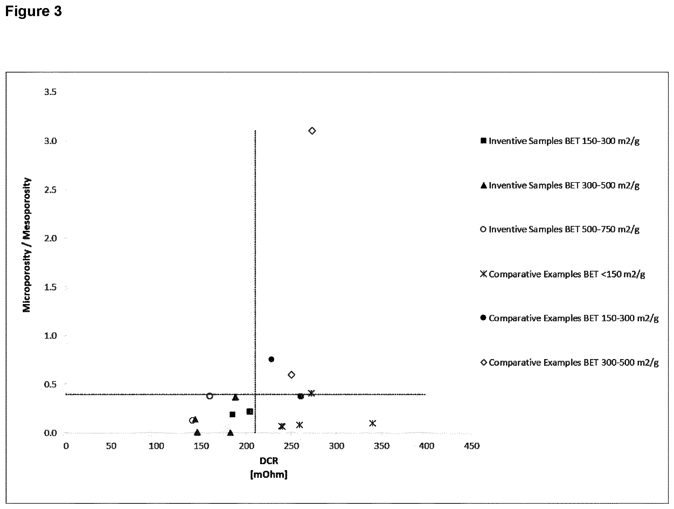

Finally, Figure 3 correlates the ratio of micro- to mesoporosity of the CCB material to the measured DCR of the tested Li-Ion batteries.

## DETAILED DESCRIPTION

There exists a wide range of physical parameters describing the physical properties of conductive carbon black (CCB) materials, which includes, for example, Braun-Emmett-Teller specific surface area (BET SSA), oil absorption number (OAN), compressed OAN (cOAN), primary particle size, Scott density, degree of branching, void volume, c/2 (interlayer spacing) Raman $I_G/I_D$ (degree of $sp^2$ hybridization), inter-aggregate pore size, average aggregate size, or total surface free energy. These parameters are all at least partially interconnected and can have a distinct influence on the processability of the CCB materials and the final performance of Li-ion batteries formed with these CCB materials.

However, the current inventors have surprisingly found that the porosity distribution as measured by the surface area attributed to pores of a certain size is an important and previously underdeveloped parameter having a profound positive influence on Li-ion battery performance comprising the CCB materials. Accordingly, the current inventors have discovered that certain, and optionally non-zero, ratios of micro- to mesoporosity in CCB materials will result in improved Li-ion battery performance comprising the CCB materials according to the invention.

In the context of CCB materials, porosity is distinguished in microporosity and mesoporosity. Within the context of the current application, micropores describe pores with a diameter of up to about 2 nm (or 20 Angström), while mesopores describe pores with a diameter in the range from about 2 nm to about 50 nm (or 20 to 500 Angström). Hereby, the porosity distribution is described as the ratio of the surface area attributed to micropores to the surface area attributed to mesopores.

**Carbonaceous Particulate Materials of the Present Disclosure and Downstream Products**

As summarized in the first aspect the invention, the present invention relates to a carbonaceous particulate material, herein also referred to as conductive carbon black (CCB) material, characterized by a BET SSA of between about 150 $m^2$/g to about 700 $m^2$/g, a ratio of micropore area, understood as pore area in pores with a diameter below 2 nm, to mesopore area, understood as pore area in pores with a diameter between 2 nm and 50 nm, of at most about 0.40, a mesopore area above about 150 $m^2$/g.

The conductive carbon black material is defined by its total Braun-Emmett-Teller specific surface area (BET SSA). The specified BET SSA range indicates the available surface area per unit mass of the carbonaceous particulate material. A higher BET SSA generally correlates with factors such as adsorption capacity, catalytic activity, conductivity and interaction with other materials, such as solvents. As such, the skilled person understands that while a certain amount of BET SSA is desired for optimal conductivity properties, a high BET SSA is undesirable due to the resulting high viscosities of electrode slurries comprising the CCB material. Hence, CCB materials according to the invention are characterized by an intermediate BET SSA of between about 150 $m^2$/g to about 700 $m^2$/g. Further, CCB materials according to the invention may in some embodiments also be characterized by a BET SSA of between about 160 $m^2$/g to about 680 $m^2$/g, of between about 180 $m^2$/g to about 650 $m^2$/g, or of between about 200 $m^2$/g to about 620 $m^2$/g. These ranges allow for the tailoring of the inventive CCB material to meet specific conductivity and/or workability requirements in its originally intended use for Li-ion batteries.

Next to the total BET SSA, the inventive materials are further defined by their specific characteristics in pore structure, namely the ratio of micropore area to mesopore area. For the applications of the CCB material described herein, it has been discovered that a ratio of micro-to mesopore area below 0.4 will lead to advantageous direct contact resistance of the resulting Li-Ion batteries. As such, CCB materials according to the invention will comprise a comparatively high amount of pores within the 2 nm to 50 nm range, while comprising comparatively fewer pores in the ranges of below 2 nm and above 50 nm when compared to common commercially established CCB materials. Accordingly, in certain embodiments the CCB material according to the invention may also be defined by a ratio of micropore area to mesopore area of at most about 0.35, or at most about 0.30. Moreover, it has surprisingly been found that in some preferred embodiments, the inventive CCB materials will benefit from a low amount of microporosity. Hence, in such embodiments the inventive CCB material may be defined by a ratio of micropore area to mesopore area of about 0.01 to about 0.40, or by a ratio of micropore area to mesopore area of about 0.03 to about 0.35, or about 0.05 to about 0.30.

CCB materials according to the invention are also defined by a minimum mesopore area of above about 150 $m^2$/g. The specified mesopore area provides the relative abundance of surface area attributed to mesopores and available for interactions and adsorption within the material. As such, in some embodiments a sizable portion of the total BET SSA of a CCB material may be attributed to mesopores. In certain embodiments, CCB materials according to the invention may also be characterized by a mesopore area above about 175 $m^2$/g, or by a mesopore area above about 200 $m^2$/g.

While the skilled person understands that the above described parameters have been found to be the most impactful for the inventive CCB materials, there are several other parameters which can further help the skilled person in distinguishing the advantageous CCB materials according to the invention.

As such, in some embodiments the carbonaceous particulate material may also be defined by its oil absorption number (OAN). The skilled person understands that the CAN refers to the amount of oil that a particulate material can absorb per unit mass. The specified CAN provides valuable information about the material's porosity, surface area, and adsorption properties. Hence, the inventive materials may be generally characterized by comparatively high CAN when compared to common commercially available CCB materials. Within such embodiments, the inventive CCB materials may be characterized by an CAN of between about 245 mL/100 g to about 400 mL/100 g or by an CAN of between about 245 mL/100 g to about 350 mL/100 g.

Moreover, additionally or alternatively the CCB material according to the invention may also be characterized by the pH value of the water in which the CCB material is dispersed in. The skilled person understands from his common general knowledge that a pH value is generally a measure of a liquid aqueous mediums' acidity or alkalinity on a scale of 1 to 14, with pH 7 being considered neutral, pH values below 7 indicating acidity, and pH values above 7 indicating alkalinity. The specified pH value attributed to CB materials provides valuable information about the material's surface chemistry and reactivity. Acidic groups on the carbon surface, such as -OH attached to aromatic moieties, will lead to an acidic reaction of the CBs when dispersed in water, and therefore to a lower pH. The inverse applies to alkaline groups on the carbon surface. A lack of any surface groups will generally lead to a neutral pH. In some embodiments of the current invention, the carbonaceous particulate material may be further characterized by a pH value as measured according to ASTM D1512 (procedure B) of about 7.0 to about 11.0 or of about 7.4 to about 10.6, or of about 7.8 to about 10.2.

Moreover, the carbonaceous particulate material described herein may be further characterized by its specific void volume which is measured as the volume of empty spaces or voids within the material per unit mass. In this embodiment, the void volume of the carbonaceous particulate material falls within the range of 40 mL/100 g to 70 mL/100 g. As such, the inventive materials are generally characterized by a significant amount of porosity and volume of space available for potential adsorption or filling with other substances

In certain embodiments the carbonaceous particulate material according to the invention is a carbon black, optionally wherein the carbon black is a conductive carbon black, further optionally wherein the conductive carbon black is selected from thermal black, acetylene black, furnace black, and Ketjen black

Accordingly, the second aspect of the present invention refers to a cathode slurry composition comprising the carbonaceous particulate material as described above, an active lithium material, a binder, and a solvent. In preferred embodiments of this aspects, the inventive CCB material as conductive additive, the active lithium material, and the binder are mixed homogeneously within the solvent. In a specific embodiment the weight ratio of active lithium material: conductive additive : binder is about 95 to 97 : 0.5 to 1.5 : 2 to 4.

Additionally or alternatively, the cathode slurry composition may be characterized by its total solid content in the slurry, wherein the total solid content comprises the lithium active material, the inventive CCB material, and the binder. In some embodiments, the total solid content of the cathode slurry may additionally or alternatively be about 35 wt% to about 90 wt%. The solid content may also be from about 45 wt% to about 85 wt%, or from about 55 wt% to about 80 wt%, or from about 65 wt% to about 75 wt%.

Again, the carbonaceous particulate material according to the invention is added to the cathode slurry to provide conductivity to the slurry. In some embodiments, the inventive dispersion comprised in the cathode slurry may represent about 0.3 wt% to about 3 wt%, about 0.4 wt% to about 2.5 wt%, or about 0.5 wt% to about 2 wt% based on the weight of the final slurry composition.

The active lithium material forms the main part by weight of the cathode slurry material and provide the lithium ions to final Li-Ion battery. The active lithium material may be comprised in the slurry composition from about 60 wt% to about 80 wt%, or from about 65 wt% to about 75 wt% based on the weight of the final slurry composition. In some preferred embodiments the active lithium material is a lithium nickel cobalt manganese oxide.

The cathode slurry comprises a solvent to disperse the solid contents and to ensure good workability. In some embodiments, the solvent of the cathode slurry may be selected from organic solvents. Organic solvents are generally liquid at room temperature and are primarily composed of carbon and hydrogen atoms, but may also contain other atoms such as nitrogen, oxygen, or halogen atoms. Common examples for organic solvents include alcohols (such as ethanol and methanol), ketones (such as acetone and methyl ethyl ketone), ethers (such as diethyl ether and tetrahydrofuran), aromatic solvents (such as toluene and xylene), amide-based solvents (such as DMF or NMP), chlorinated solvents (such as DCM and chloroform), and hydrocarbons (such as hexane and heptane). Optionally, the organic solvent to be used to disperse the solid contents is an amide-based solvent. In preferred embodiments, the solvent to be used in the dispersion is N-Methyl-2-pyrrolidone (NMP).

Finally, the cathode slurry composition comprises a binder compound. The binder may be comprised in the slurry composition from about 1 wt% to about 5 wt%, optionally from about 1.5 wt% to about 4.5 wt% based on the weight of the final slurry composition. The binder may be an organic polymer, optionally wherein the binder is polyvinylidene fluoride (PVDF).

As part of the third aspect of the invention, a cathode is described, wherein the cathode is produced by applying the cathode slurry composition according to the second aspect on a substrate and subsequently drying the coated substrate at a temperature of at least 100 °C for at least 5 mins.

The substrate serves as structural support and conductive base for the cathode slurry applied thereon. In some embodiments the substrate is a metal foil, optionally wherein the metal foil comprises at least one metal, or an alloy, or a mixture comprising the at least one metal. Metal foils to be used in cathodes according to the invention typically have any thickness suitable for use in electrodes, generally considered to be from about 1 $\mu$m to about 50 $\mu$m. In certain of the above described embodiments the metal, or an alloy, or a mixture comprising the at least one metal comprises aluminium, iron, zinc, nickel, copper, silver, and/or gold.

The cathode slurry as described above is applied to the substrate by any suitable means. Within some embodiments the cathode slurry is applied to the substrate by a roll-to-roll process. In some embodiments the coated substrate may be pressed to increase loading density of the coating on the cathode after the drying process.

Further, within the fourth aspect of the invention a Li-Ion battery comprising the cathode of the third aspect and/or the carbonaceous particulate material of the first aspect of the invention is described. Li-Ion batteries according to the invention display improved properties, such as for example improved direct contact resistance.

**Process for Preparing the Carbonaceous Particulate Material of the Present Invention**

In general, the CCBs with optimized porosity distribution according to the invention can be obtained by three distinct paths, namely post-treatment processes of subjecting a low-BET carbonaceous particulate material feed (such as a carbon black) with a low BET SSA (below about 140 m$^2$/g) or high-BET carbonaceous particulate material feed (such as a carbon black) with a high BET SSA (600 m$^2$/g and about 1500 m$^2$/g) to specific conditions. Moreover, it is possible to obtain the carbonaceous particulate materials according to the invention by *do novo* synthesis from carbon feedstock. Hence, the methods according to the current invention enable the manufacture CCB materials with an intermediate BET Specific Surface Area as required for both good conductivity in combination with a workable viscosity of any dispersions containing the carbonaceous particulate material, while selectively tuning their respective microporosity and mesoporosity areas.

The pore size and its amount characterizing the CCB material can be tailored or varied to some extend by post-treatment processes described herein, such as activation and/or graphitization processes. By adjusting the main parameters, such as temperature, residence time, and the CCB/gas ratio the skilled person can tailor CB materials to a certain degree. It is considered obvious that the gas composition and starting material carbon black also determine final porosity range.

As such, the fifth aspect of the invention describes process for producing the CCB material according to the invention, comprising subjecting a low-BET carbonaceous particulate material feed with a BET SSA of below about 140 m$^2$/g to a reactive process gas at temperatures ranging from about 800 °C to about 1200 °C and at a pressure from atmospheric pressure to about 80 bar for about 10 minutes up to about 600 minutes.

As understood by the skilled person, the post-treatment process is considered an activation process. The reactive process gas chemically reacts with the low-BET carbonaceous particulate material feed. Hereby, steam can react with the low-BET carbonaceous particulate material feed for example in steam reforming processes, $O_2$ facilitates direct oxidation of carbon materials on the low-BET carbonaceous particulate material feed, while $CO_2$ can react in a shift of elemental carbon to carbon monoxide. In some embodiments, the process may use a reactive process gas selected from the group comprising $CO_2$ gas and/or steam, or mixtures thereof.

While the activation processes generally start at temperatures around 600 °C, from practical point of view temperatures above that temperature, such as for example 800 °C are used. As such, in certain embodiments the process may also be performed at temperatures of between 900 °C and 1100 °C. In some embodiments, such as those using steam and/or $CO_2$, the activation reaction is an endothermal reaction, resulting in the need for continuous heating of the furnace in the post-treatment process, for example by a constant supply of electricity to electric heating elements.

In some embodiments, the process may proceed at elevated pressures. It is generally understood, that increased reactive process gas pressure will lead to increased kinetics of the activation reaction. However, it is further understood that the process proceeds just as well under atmospheric pressure, which is a preferred embodiment of the post-treatment activation process according to the invention.

It is considered obvious, that the dwell time of the low-BET carbonaceous particulate material feed will have an impact on the degree of activation. As known to the skilled person, dependent on for example the physical parameters of the low-BET carbonaceous particulate material feed , the reactive gas composition, and the chosen temperature, the dwell time has to be adjusted accordingly to achieve the desired degree of activation. In specific embodiments, dwell times of about 30 minutes up to about 400 minutes may be applied.

As second suitable post-treatment process, the invention relates in a sixth aspect to a process for producing the carbonaceous particulate material according to the invention, comprising subjecting a high-BET carbonaceous particulate material feed with a BET SSA of between about 600 m$^2$/g and about 1500 m$^2$/g to an inert process gas at a temperature from about 900 °C to about 2200 °C and at a pressure from atmospheric pressure to about 80 bar for about 10 minutes up to about 600 minutes.

As understood by the skilled person, the post-treatment process is considered a graphitization process. The inert process gas does not chemically react with carbon structures of the high-BET carbonaceous particulate material feed even under elevated temperatures, but allows for a partial transition to increase the amount and/or size of sp$^2$-hybridized areas within the high-BET carbonaceous particulate material feed . It is generally known to the skilled person that a graphitization treatment under correct conditions may serve to reduce the total BET SSA and the microporosity of certain carbonaceous materials. In some embodiments, the process may use an inert process gas selected from the group comprising nitrogen gas and/or argon gas, or mixtures thereof.

In certain embodiments the graphitization post-treatment process may also be performed at temperatures of between 1000 °C and 2100 °C.

In some embodiments, the process may proceed at elevated pressures. It is generally understood, that increased inert process gas pressure will lead to increased kinetics of the graphitization reaction. However, it is further understood that the process proceeds just as well under atmospheric pressure, which is a preferred embodiment of the post-treatment graphitization process according to the invention.

It is generally understood, that the dwell time of the high-BET carbonaceous particulate material feed will have an impact on the degree of graphitization. As known to the skilled person, dependent on for example the physical parameters of the high-BET carbonaceous particulate material feed and the chosen temperature, the dwell time has to be adjusted accordingly to achieve the desired degree of graphitization. In specific embodiments, dwell times of about 30 minutes up to about 400 minutes may be applied.

In some embodiments of the post-treatment processes according to the invention, the low-BET carbonaceous particulate material feed and/or the high-BET carbonaceous particulate material feed may be a carbon black material. Optionally, the CB particles may be selected from thermal black, acetylene black, or furnace black, or Ketjen black which are different types of amorphous carbon black, obtained by incomplete combustion or thermal decomposition of hydrocarbons. Further optionally, the carbon blacks for use in the posttreatments according to the invention may be obtained from commercial sources, or they may be synthesized from hydrocarbon starting materials.

Finally, according to the seventh aspect of the invention, a process for the preparation of the CCB materials according to the invention is described herein. The process comprises a thermal-oxidative decomposition by feeding hydrocarbons with high degree of aromaticity with sub-stoichiometric amounts of air, $CO_2$ and/or steam into a reactor, thereby causing the decomposition of the gasified hydrocarbons at a temperature of between about 1000°C and about 1600°C.

In preferred embodiments, the hydrocarbons with high degree of aromaticity are liquid or gaseous, such as for example coal tar oil, ethylene tar, cat cracker oil, natural gas, heavy fractions of petrochemical distillation residues, or mixtures of any of these materials together.

In some embodiments, the temperature may range for instance from 1400 and 1500 °C or from 1450 to 1550°C. Additionally or alternatively, the formation of the CCB materials according to the invention may also proceed in the presence of oxidative species such as $O_2$. The reaction time in the reactor is typically from less than a second up to a few seconds, though it will be appreciated that the exact conditions depend on the carbon source and the reactor employed for the generation of the CCB material.

A variety of furnace set ups may be used in the process of making the inventive carbonaceous particulate material. In some embodiments, the furnace is a continuous furnace set-up, or a batch furnace set up. Additionally or alternatively, the furnace may comprise a fluidized bed set-up. In some embodiments, the furnace may be a rotary kiln furnace or a muffle box furnace. Preferably, the furnace may allow for treatment under inert gas atmosphere, optionally for treatments under increased pressure.

**Definitions**

The term "about", when used herein in the context of parameters or values mentioned herein, encompasses deviations of $\pm 10\%$ of the given value unless stated otherwise.

It is to be noted that the term "a" or "an" entity refers to one or more of that entity; for example, "a carbonaceous particulate material," is understood to represent one or more carbonaceous particulate materials. As such, the terms "a" (or "an"), "one or more," and "at least one" can be used interchangeably herein.

Furthermore, "and/or" where used herein is to be taken as specific disclosure of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).

It is understood, that aspects are described herein with the language "comprising", otherwise analogous aspects described in terms of "consisting of" and/or "consisting essentially of" are also provided.

Units, prefixes, and symbols are denoted in their Système International d'Unités (SI) accepted form. Numeric ranges are inclusive of the numbers defining the range.

The percentage (%) values specified herein are by weight unless specified otherwise.

The headings provided herein are not limitations of the various aspects of the disclosure, which can be had by reference to the specification as a whole. Accordingly, the terms defined immediately below are more fully defined by reference to the specification in its entirety.

The term "micropore area", when used herein in the context of describing the size of carbonaceous particulate material pores, refers to pores with a diameter of equal to or smaller than 2 nm.

The term "mesopore area", when used herein in the context of describing the size of carbonaceous particulate material pores, refers to pores with a diameter of 2 nm to 50 nm.

When referring to the inventive materials disclosed herein, "conductive carbon black (CCB)" and "carbonaceous particulate material" are used interchangeably.

**Measurement Methods**

Suitable methods for determining the various properties and parameters used to define the CCB materials and compositions / downstream products comprising them are set out in more detail below.

Specific BET Solid Surface Area, Micropore and Mesopore Area [m$^2$/g]

The method is based on the registration of the absorption isotherm of liquid nitrogen in the pressure range $p/p_0$ = 0.01-0.995, at 77 K, where $p_0$ is the saturation pressure. The nitrogen gas adsorption was performed on an ASAP2020 from Micromeritics. The sample was degassed in a vacuum for at least 8 hours at 573 K before analysis. Following the procedure proposed by Brunauer, Emmet, and Teller (Adsorption of Gases in Multi-molecular Layers, J. Am. Chem. Soc., 1938, 60, 309-319), the monolayer capacity can be determined. On the basis of the cross-sectional area of the nitrogen molecule, the monolayer capacity, and the weight of the sample, the specific surface can then be calculated. The microporosity was obtained with the t-plot (Harkins & Jura) according to the formula proposed by Harkins & Jura with a thickness t-value in the range 3.5-5 Angström.

$$t = \sqrt{\frac{13.99}{0.034 - log\ log\ (p/p_0)}}$$

and the mesoporosity was obtained from the adsorption isotherm using the method of Barrett, Joyner, and Halenda (BJH) with the thickness curve based on Halsey equation and Faas correction. The mesopore area in the pore range 20 to 500 Angström was extracted.

**References:**

Ravikovitch, P., Vishnyakov, A., Russo, R., Neinark, A., Langmuir, 16, 2000, 2311-2320, Jagiello, J., Thommes, M., Carbon, 42, 2004, 1227-1232,
Barrett, E.P., Joyner, L.G. and Halenda, P.P., Journal of the American Chemical Society, 1951, 73, 373-380,
Harkins, W.D., and Jura, G., J. Chem. Phys., 1943,11: 430.
Oil Absorption Number (OAN) [mL/100 g]

The OAN is measured following the ASTM D2414 (procedure A). Paraffin oil is added to a dried carbon black sample in the mixer chamber of the absorptiometer. As the sample absorbs the oil the viscosity increases. When the viscosity reaches a predetermined torque level (400 mNm) the volume of the added oil is read. The volume of oil per unit mass of carbon black is the OAN. Reference: ASTM D2414-01

pH Measurements

The pH is measured following the ASTM D1512 (procedure B). A sample of 1.5 g of CCB is dispersed in distilled water with the aid of a few drops of acetone and of an ultrasonic treatment. The electrode of the calibrated pH-meter is placed in the slurry. After a stabilization time of 2 minutes the slurry is stirred and the pH value is recorded to the nearest 0.05 unit.

Void Volume

The void volume is measured following the ASTM 7854-18c. 1.000 g +/- 0.0005g CCB is weighted and transferred into the cylindrical chamber using brush and funnel. A pastille is applied to the sample and a movable piston is raised. The measuring chamber is closed. Pressure is applied by the movable piston and the compressed volume of the sample is recorded automatically as a function of pressure applied. A profile of void volume as a function of pressure at varying levels of density is obtained. The void volume is reported at 100 MPa mean pressure.

**Method used for Benchmarking Li-Ion Batteries**

Direct contact resistance (DCR)

Batteries obtained according the examples were subjected to DCR tests, which were performed at room temperature (R.T. = 25 °C):

The battery cells were first charged to a state of charge (SOC) of 50% at 25 °C. The cells were then maintained at R.T. for 3 hrs. The DCR was measured by applying a series of discharging pulse currents at a C-rate of 0.2 C, 0.5 C and 1 C. The C-rate describes the speed at which a battery is fully discharged (or charged). For example, charging at a C-rate of 1 C means that the battery is fully discharged in one hour. Each current lasted for 5 seconds. The DCR was calculated by the following equation:

$$DCR\ (R.T.) = (\frac{V_1 - V_2)}{(I_1 - I_2)}$$

Having described the various aspects of the present invention in general terms, it will be apparent to those of skill in the art that many modifications and slight variations are possible without departing from the spirit and scope of the present invention. The present invention is furthermore described by reference to the following, non-limiting numbered embodiments:

1. A carbonaceous particulate material, wherein the carbonaceous particulate material is characterized by

(i) a BET SSA of between about 150 $m^2$/g to about 700 $m^2$/g;

(ii) a ratio of micropore area, understood as pore area in pores with a diameter below 2 nm, to mesopore area, understood as pore area in pores with a diameter from 2 nm and 50 nm, of at most about 0.40; and

(iii) a mesopore area above about 150 $m^2$/g.

2. The carbonaceous particulate material according to embodiment 1, wherein the carbonaceous particulate material is characterized by a BET SSA of between about 160 $m^2$/g to about 680 $m^2$/g, optionally wherein the carbonaceous particulate material has a BET SSA of between about 180 $m^2$/g to about 650 $m^2$/g, or of between about 200 $m^2$/g to about 620 $m^2$/g.

3. The carbonaceous particulate material according to embodiment 1 or embodiment 2, wherein the carbonaceous particulate material is characterized by a ratio of micropore area to mesopore area of at most about 0.35, or at most about 0.30; or wherein the carbonaceous particulate material is characterized by a ratio of micropore area to mesopore area of about 0.01 to about 0.40, optionally wherein the carbonaceous particulate material is characterized by a ratio of micropore area to mesopore area of about 0.03 to about 0.35, or about 0.05 to about 0.30.

4. The carbonaceous particulate material according to any one of embodiments 1 to 3

wherein the carbonaceous particulate material is characterized by a mesopore area above about 175 $m^2$/g, optionally wherein the carbonaceous particulate material is characterized by a mesopore area above about 200 $m^2$/g.

5. The carbonaceous particulate material according to any one of embodiments 1 to 4,

wherein the carbonaceous particulate material is further characterized by an oil absorption number (OAN) of between about 245 mL/100 g to about 400 mL/100 g, optionally wherein the particulate carbon has an OAN of between about 245 mL/100 g to about 350 mL/100 g.

6. The carbonaceous particulate material according to any one of embodiments 1 to 5,

wherein the carbonaceous particulate material is further characterized by an pH value as measured according to the described method of about 7.0 to about 11.0, optionally wherein the carbonaceous particulate material is characterized by a pH value of about 7.4 to about 10.6, or of about 7.8 to about 10.2.

7. The carbonaceous particulate material according to any one of embodiments 1 to 6,

wherein the carbonaceous particulate material is a carbon black, optionally
wherein the carbon black is a conductive carbon black, further optionally
wherein the conductive carbon black is selected from thermal black, acetylene black, furnace black, and Ketjen black.

8. A cathode slurry composition, comprising

(i) the carbonaceous particulate material of any one of embodiments 1 to 7;

(iv) an active lithium material;

(v) a binder; and

(vi) a solvent.

9. The cathode slurry according to embodiment 8, wherein the carbonaceous particulate material of any one of embodiments 1 to 7 is comprised in the slurry composition from about 0.3 wt% to about 3 wt%, optionally from about 0.4 wt% to about 2.5 wt%, or from about 0.5 wt% to about 2 wt%;

10. The cathode slurry according to embodiment 8 or embodiment 9, wherein the at least one active lithium material comprises lithium polymer compounds, lithium oxides, or lithium nickel cobalt manganese oxides, optionally wherein the at least one active lithium material is a lithium nickel cobalt manganese oxide,
further optionally wherein the active lithium material is comprised in the slurry composition from about 60 wt% to about 80 wt%, optionally from about 65 wt% to about 75 wt%.

11. The cathode slurry according to any one of embodiments 8 to 10, wherein the binder is comprised in the slurry composition from about 1 wt% to about 5 wt%, optionally from about 1.5 wt% to about 4.5 wt%;
further optionally wherein the binder is an organic polymer, preferably wherein the binder is polyvinylidene fluoride (PVDF).

12. The cathode slurry according to any one of embodiments 8 to 11, wherein the cathode slurry solvent is an organic solvent, optionally

wherein the cathode slurry solvent is an amide solvent, further optionally
wherein the cathode slurry solvent is N-Methylpyrrolidone (NMP).

13. The cathode slurry according to embodiment 8 or embodiment 12, wherein the final solid content of the slurry composition is from about 35 wt% to about 90 wt%, optionally wherein the solid content is from about 45 wt% to about 85 wt%, or from about 55 wt% to about 80 wt%, or from about 65 wt% to about 75 wt%.

14. The cathode slurry according to any one of embodiments 8 to 13, wherein the ratio of active lithium material to carbonaceous particulate material to binder is between about 94.5 to 97.5 : 0.5 to 1.5 : 2 to 4.

15. A cathode wherein the cathode is produced by applying the cathode slurry composition according to any one of embodiments 9 to 14 on a substrate and subsequently drying the coated substrate at a temperature of at least 100 °C for at least 5 mins.

16. The cathode according to embodiment 15, wherein the substrate is a metal foil, optionally wherein the metal foil comprises at least one metal, or an alloy, or a mixture comprising the at least one metal,
further optionally wherein the metal, or an alloy, or a mixture comprising the at least one metal comprises aluminium, iron, zinc, nickel, copper, silver, and/or gold, preferably wherein the metal foil is made out of aluminium metal.

17. The cathode according to any one of embodiments 15 to 16, wherein the coating of the metal foils is achieved by means of a roll-to-roll process.

18. A lithium ion battery comprising the carbonaceous particulate material according to any one of embodiments 1 to 7, and/or the cathode according to any one of embodiments 15 to 17.

19. A process for producing a carbonaceous particulate material according to any one of embodiments 1 to 7, comprising subjecting a low-BET carbonaceous particulate material feed comprising an outer surface with carbon components and with a BET SSA of below about 140 m$^2$/g to:

(i) a reactive process gas capable of oxidizing at least a portion of the carbon components on the outer surface;

(vii) at a temperature from about 800 °C to about 1200 °C;

(viii) at a pressure from atmospheric pressure to about 80 bar; and

(ix) for about 10 minutes up to about 600 minutes;

optionally wherein the BET SSA of the carbonaceous particulate material is higher than the BET SSA of the low-BET carbonaceous particulate material feed.

20. The process of embodiment 19, wherein the reactive process gas is selected from the group comprising $CO_2$ gas or steam, or mixtures thereof.

21. A process for producing a carbonaceous particulate material according to any one of embodiments 1 to 7, comprising subjecting a high-BET carbonaceous particulate material feed with a BET SSA of between about 600 m$^2$/g and about 1500 m$^2$/g to:

(i) an inert process gas;

(i) at a temperature from about 900 °C to about 2200 °C;

(ii) at a pressure from atmospheric pressure to about 80 bar; and

(iii) for about 10 minutes up to about 600 minutes;

optionally wherein the BET SSA of the carbonaceous particulate material is lower than the BET SSA of the high-BET carbonaceous particulate material feed.

22. The process of embodiment 21, wherein the inert process gas is selected from the group comprising nitrogen or argon gas, or mixtures thereof.

23. The process according to any one of embodiments 21 to 22, wherein the high-BET carbonaceous particulate material feed is a carbon black material, optionally selected from the group comprising thermal black, acetylene black, furnace black, Ketjen black, or mixtures thereof.

24. A process for producing a carbonaceous particulate material according to any one of embodiments 1 to 7, comprising a thermal-oxidative decomposition by feeding hydrocarbons with high degree of aromaticity together with sub-stoichiometric amounts of air, $CO_2$, and/or steam into a reactor, thereby causing the decomposition of the gasified hydrocarbons at a temperature of between about 1000°C and about 1600°C.

## EXAMPLES

### Example 1 - Preparation of Carbonaceous Particulate Materials

A variety of CCB materials according to the present disclosure were prepared by the methods described herein. The CCB materials were prepared with a range in specific surface area while tuning microporosity and mesoporosity area in order to obtain an optimal pore size distribution. The inventive CCB materials were compared to a variety of known/commercially available carbon blacks. Generally, methods of obtaining the inventive material can be categorized into 3 main methods: High temperature post-treatment of low BET SSA carbon blacks, high-temperature treatment of high BET SSA carbon blacks, and a direct synthesis method.

The inventive examples 1,2,5,6 and 7 were prepared by high temperature post-treatment using low BET SSA carbonaceous particulate material (BET SSA < 140 m$^2$/g) as starting material. The starting carbon black material was loaded into a fixed bed or fluidized bed furnace in a batch or continuous set-up at room temperature and subjected to reactive gas or gas mixtures such as $CO_2$ and/or steam. While activation processes start at temperatures around 600°C, temperatures between 800 °C and 1200 °C are used from a practical point of view. Post-treatment temperatures were held for 10 minutes up to 600 minutes at a pressure of between about atmospheric pressure to about 80 bar. After cooling to room temperature, CCB materials according to the invention (named Inventive Example 1,2,5,6 and 7 - IE 1, IE 2, IE 5, IE 6 and IE 7) were obtained.

The inventive examples 3 and 4 were prepared by high temperature post-treatment using high BET SSA carbonaceous particulate material (BET > 600 and <1500 m$^2$/g) as starting material. The starting carbon black material was loaded into a fixed bed or fluidized bed furnace in a batch or continuous set-up at room temperature and subjected to inert gas or gas mixtures such as nitrogen and/or argon. Temperatures between 900 °C and 2200 °C were used and post-treatment temperatures were held for 10 minutes up to 600 minutes at a pressure of between about atmospheric pressure to about 80 bar. After cooling to room temperature, CCB materials according to the invention (named Inventive Example 3 and 4 - IE 3 and IE 4) were obtained.

The inventive example 8 was prepared from hydrocarbons with a high degree of aromaticity. The process utilized a thermal-oxidative decomposition by feeding hydrocarbons with high degree of aromaticity (preferably liquid or gaseous), such as coal tar oil, ethylene tar, cat cracker oil, natural gas, heavy fractions of petrochemical distillation residues, or mixtures of any of these materials together with sub-stoichiometric amounts of air and/or steam into a reactor, thereby causing the decomposition of the gasified hydrocarbons at a temperature of between about 1000°C and about 1600°C, for instance from 1400 and 1500 °C or from 1450 to 1550°C, and forming the carbon black materials in the presence of oxidative species such as $O_2$, $CO_2$, $H_2O$, or mixtures thereof. The reaction time in the reactor is typically from less than a second up to a few seconds, though it will be appreciated that the exact conditions depend on the carbon source and the reactor employed for the generation of the carbon black material.

The physical properties of the inventive CCB materials according to the present disclosure (IE 1 to IE 8) were compared to known and commercially available comparative carbon black example materials named comparative examples 1 to 9 herein (CE 1 to CE 9). These carbon black samples, as well as some comparative examples were characterized in terms of the following parameters: BET SSA, Micropore area, Mesopore area, the ratio of Micropore to Mesopore area, Oil absorption number, Void volume at 100 MPa, pH when suspended in water. The data is summarized in table 1:

**Table 1: Physical properties of carbon blacks**

| Sample | BET [m$^2$/g] | Microporosity [m$^2$/g] | Mesoporosity [m$^2$/g] | OAN [ml/100g] | Void Volume at 100 Mpa [ml/100g] | pH |
|---|---|---|---|---|---|---|
| IE 1 | 210 | 35 | 161 | 301 | 42 | 9,5 |
| IE 2 | 228 | 33 | 177 | 248 | 43 | 9,3 |
| IE 3 | 344 | 0 | 347 | 289 | 66 | 9,2 |
| IE 4 | 343 | 2,9 | 351 | 342 | 67 | 9,7 |
| IE 5 | 410 | 50 | 350 | 309 | 46 | 7,9 |
| IE 6 | 477 | 93 | 253 | 302 | 55 | 8,5 |
| IE 7 | 544 | 59 | 482 | 290 | 47 | 8,2 |
| IE 8 | 607 | 136 | 362 | 321 | 56 | 8,8 |
| CE 1 | 61 | 4,4 | 64 | 285 | 40 | 9,3 |
| CE 2 | 55 | 4,8 | 58 | 150 | | 7,3 |
| CE 3 | 59 | 4,5 | 62 | 273 | 43 | 8,8 |
| CE 4 | 44 | 4,4 | 43 | 312 | 44 | 8,9 |
| CE 5 | 132 | 35 | 85 | 276 | 50 | 8,7 |
| CE 6 | 208 | 49 | 130 | 283 | 45 | 9,4 |
| CE 7 | 225 | 93 | 123 | 207 | 44 | 4,7 |
| CE 8 | 373 | 205 | 66 | 181 | 54 | 5 |

(continued)

| Sample | BET [m$^2$/g] | Microporosity [m$^2$/g] | Mesoporosity [m$^2$/g] | OAN [ml/100g] | Void Volume at 100 Mpa [ml/100g] | pH |
|---|---|---|---|---|---|---|
| CE 9 | 385 | 117 | 195 | 288 | 48 | 8 |

As apparent from table 1 and the examples listed therein, CCB materials characterized by a low BET SSA (< 100 m$^2$/g) are also characterized by a low ratio of Micropore to Mesopore area. Further, for examples with similar BET SSAs the inventive CCB materials display an increased mesoporosity compared to the comparative examples.

**Example 2 - Preparation and tests of Li-Ion Batteries prepared from conductive carbon black (CCB) materials**

The various CCB materials were also tested for their direct contact resistance (DCR) when used as conductive material in cathodes for Li-Ion Batteries.

**For the positive electrode**

Materials were weighed and put into the mixer machine's container. The powders were then mixed for 5 minutes at low mixing speed. The mixing process can be carried out by various mixers that are used for produce the electrode slurry for coating. For example a Primix 2P-03 type mixer can be used with a mixing speed of 20 rpm.
The final slurry composition for the positive electrode was lithium nickel cobalt manganese oxide : conducting additive: binder = 96:1:3 with a solid content of 70%. The solvent used in positive electrode preparation was N-Methyl-2-pyrrolidone (NMP).
The resulting slurry was then coated onto Aluminum foil with a roll to roll coater. The drying temperature was 120°C. The loading mass for the material was 14 mg/cm$^2$. The electrode material was pressed to a density of 3.2 g/cm$^3$.

**For the negative electrode**

Synthetic graphite was weighed and put into the mixer machine's container. The powder was then mixed for 5 minutes at low mixing speed. The mixing process can be carried out by various mixers that are used for producing the electrode slurry for coating. For example a Primix 2P-03 type mixer can be used with a mixing speed of 20 rpm.
1 wt% Sodium carboxymethylcellulose (CMC) and 0.5 wt% carbon black dispersion (Imerys Cnergy C65T) was added and mixed at 50 rpm for 30 min. The slurry was then mixed at 80 rpm for 30 min. Finally, Styrene-Butadiene Rubber (SBR, 48.5 wt%) suspension was added into the container. The slurry was stirred at 80 rpm for 30 min and then degassed at 20 rpm for 10 min. DI water was added to adjust the solid content to 49 wt%. The weight ratio between different components were graphite : carbon black dispersion : CMC : binder = 97.5:0.5:1.0:1.5.
The resulting slurry was then coated onto copper foil using a roll to roll coater while drying at 80°C. The loading mass for the material was 8 mg/cm$^2$. The electrode material was pressed to a density of 1.6 g/cm$^3$.

**Assembly of Pouch Cells**

500mAh pouch cells were assembled in a dry room with a dew point of below -40°C. The electrolyte was 1M LiPF$_6$ EC/EMC/DMC (1/3 each in volume) with 1 wt% vinylene carbonate (VC).
The finished battery cells were tested for their respective direct contact resistance according to the method described in the methods section. The results for the CCB materials are summarized in table 2 below. For sake of convenience, BET SSA and mesopore area from table 1 are also reproduced below:

**Table 2: Results of DCR measurements of Li-ion batteries prepared with CCB materials**

| Sample | BET [m$^2$/g] | Mesoporosity [m$^2$/g] | Microporosity / Mesoporosity | DCR [mOhm] |
|---|---|---|---|---|
| IE 1 | 210 | 161 | 0.22 | 204 |
| IE 2 | 228 | 177 | 0.19 | 185 |
| IE 3 | 344 | 347 | 0.00 | 182 |
| IE 4 | 343 | 351 | 0.01 | 146 |
| IE 5 | 410 | 350 | 0.14 | 143 |

(continued)

| Sample | BET [m$^2$/g] | Mesoporosity [m$^2$/g] | Microporosity / Mesoporosity | DCR [mOhm] |
|---|---|---|---|---|
| IE 6 | 477 | 253 | 0.37 | 188 |
| IE 7 | 544 | 482 | 0.12 | 141 |
| IE 8 | 607 | 362 | 0.38 | 160 |
| CE 1 | 61 | 64 | 0.07 | 240 |
| CE 2 | 55 | 58 | 0.08 | 259 |
| CE 3 | 59 | 62 | 0.07 | 239 |
| CE 4 | 44 | 43 | 0.10 | 340 |
| CE 5 | 132 | 85 | 0.41 | 272 |
| CE 6 | 208 | 130 | 0.38 | 261 |
| CE 7 | 225 | 123 | 0.76 | 228 |
| CE 8 | 373 | 66 | 3.11 | 273 |
| CE 9 | 385 | 195 | 0.60 | 250 |

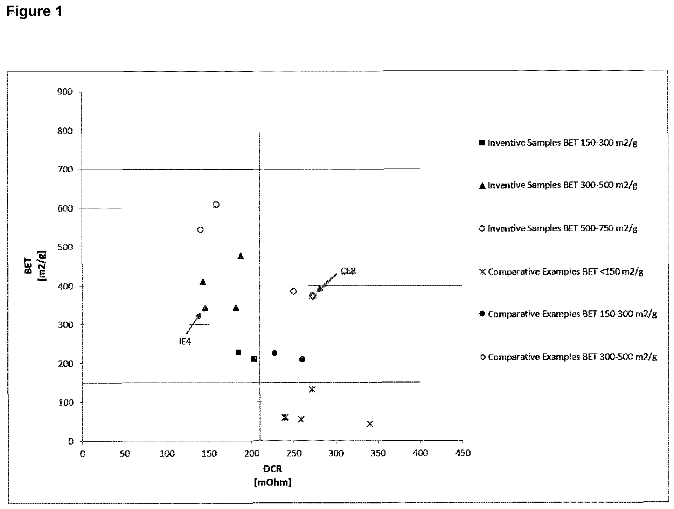

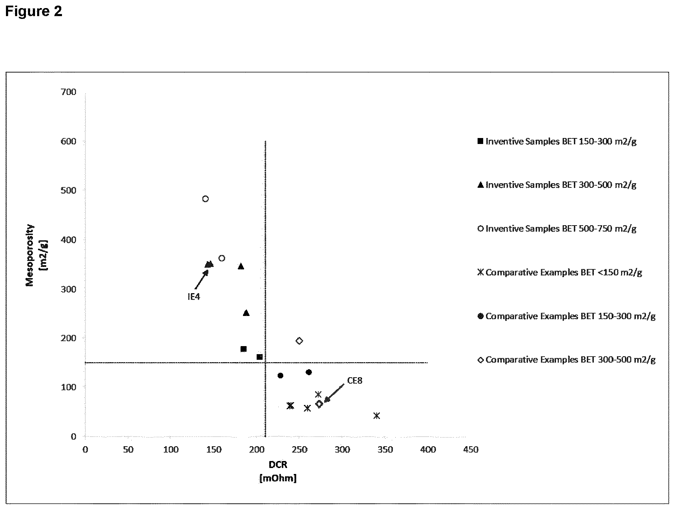

Figure 1 visualizes the correlation between BET SSA and DCR. Additionally, Figure 2 demonstrates the evolution of DCR with rising surface area contributed to mesopores. Finally, Figure 3 correlates the ratio of microporosity/mesoporosity to the measured DCR as set out in Table 2, and shows in the legend the BET surface area ranges for such materials.

There is a general consensus in the field of a correlation between increases in total surface area and an increase in electrode conductivity.

However, as apparent from Figure 2 it has now been surprisingly found by the inventors that there is a strong correlation between mesopore area and direct contact resistance. This correlation is especially pronounced in the difference between IE 4 and CE 8 with comparable total surface areas, wherein IE 4 has a much higher mesopore area compared to CE 8. This results in a much lower electrical resistance for a cathode prepared from IE 4 than one prepared with CE 8, despite having similar surface areas. Further, a comparison between IE 7 and IE 8 supports this conclusion, as the sample with a lower surface area, but a higher mesopore area resulted in a cathode with a lower DCR.

Additionally, Figure 3 demonstrates for the first time that a certain ratio between micro- and mesoporosity further improves the direct contact resistance of batteries formed with the inventive carbon blacks. It has been demonstrated, that tailoring carbon blacks within a given total surface area to a certain ratio of micro- to mesoporosity will result in optimal performance in Li-Ion batteries, as determined by the measured DCR. This difference is especially pronounced in the difference between IE 3 and IE 5 as well as IE 7 and IE 8, wherein a certain ratio of micro- to mesoporosity has proven to result optimal Li-Ion battery performance.

The exemplary discussion of the results show that the best performance has been always obtained with CCB materials with a ratio microporosity to mesoporosity below 0.45. These results have been demonstrated with carbon black samples within a wide BET range of above 150 m$^2$/g and in the range 150-610 m$^2$/g.

## Claims

1.   A carbonaceous particulate material, wherein the carbonaceous particulate material is **characterized by**

    (x) a BET SSA of between about 150 m$^2$/g to about 700 m$^2$/g;
    (xi) a ratio of micropore area, understood as pore area in pores with a diameter below 2 nm, to mesopore area, understood as pore area in pores with a diameter from 2 nm and 50 nm, of at most about 0.40; and
    (xii) a mesopore area above about 150 m$^2$/g.

2.   The carbonaceous particulate material according to claim 1, wherein the carbonaceous particulate material is further **characterized by** an oil absorption number (OAN) of between about 245 mL/100 g to about 400 mL/100 g, optionally wherein the particulate carbon has an OAN of between about 245 mL/100 g to about 350 mL/100 g.

3.   The carbonaceous particulate material according to any one of claims 1 to 2, wherein the carbonaceous particulate material is further **characterized by** a pH value as measured according to the described method of about 7.0 to about 11.0, optionally wherein the carbonaceous particulate material is **characterized by** an pH value of about 7.4 to about 10.6, or of about 7.8 to about 10.2.

4. The carbonaceous particulate material according to any one of claims 1 to 3, wherein the carbonaceous particulate material is a carbon black, optionally wherein the carbon black is a conductive carbon black, further optionally wherein the conductive carbon black is selected from thermal black, acetylene black, furnace black, and Ketjen black.

5. A cathode slurry composition, comprising

   (ii) the carbonaceous particulate material of any one of claims 1 to 4;
   (xiii) an active lithium material;
   (xiv) a binder; and
   (xv) a solvent.

6. The cathode slurry according to claim 5, wherein the at least one active lithium material comprises lithium polymer compounds, lithium oxides, or lithium nickel cobalt manganese oxides, optionally wherein the at least one active lithium material is a lithium nickel cobalt manganese oxide,
   further optionally wherein the active lithium material is comprised in the slurry composition from about 60 wt% to about 80 wt%, optionally from about 65 wt% to about 75 wt%.

7. A cathode wherein the cathode is produced by applying the cathode slurry composition according to claim 6 on a substrate and subsequently drying the coated substrate at a temperature of at least 100 °C for at least 5 mins.

8. The cathode according to claim 7, wherein the substrate is a metal foil, optionally

   wherein the metal foil comprises at least one metal, or an alloy, or a mixture comprising the at least one metal, further optionally wherein the metal, or an alloy, or a mixture comprising the at least one metal comprises aluminium, iron, zinc, nickel, copper, silver, and/or gold, preferably wherein the metal foil is made out of aluminium metal.

9. A lithium ion battery comprising the carbonaceous particulate material according to any one of claims 1 to 4, and/or the cathode according to any one of claims 7 to 8.

10. A process for producing a carbonaceous particulate material according to any one of claims 1 to 4, comprising subjecting a low-BET carbonaceous particulate material feed comprising an outer surface with carbon components and with a BET SSA of below about 140 $m^2/g$ to:

    (ii) a reactive process gas capable of oxidizing at least a portion of the carbon components on the outer surface;
    (xvi) at a temperature from about 800 °C to about 1200 °C;
    (xvii) at a pressure from atmospheric pressure to about 80 bar; and
    (xviii) for about 10 minutes up to about 600 minutes.

11. The process of claim 10, wherein the reactive process gas is selected from the group comprising $CO_2$ gas or steam, or mixtures thereof.

12. A process for producing a carbonaceous particulate material according to any one of claims 1 to 4, comprising subjecting a high-BET carbonaceous particulate material feed with a BET SSA of between about 600 $m^2/g$ and about 1500 $m^2/g$ to:

    (ii) an inert process gas;
    (iv) at a temperature from about 900 °C to about 2200 °C;
    (v) at a pressure from atmospheric pressure to about 80 bar; and
    (vi) for about 10 minutes up to about 600 minutes.

13. The process of claim 12, wherein the inert process gas is selected from the group comprising nitrogen or argon gas, or mixtures thereof.

**14.** The process according to any one of claims 12 to 13, wherein the starting material carbonaceous particulate material is a carbon black material, optionally selected from the group comprising thermal black, acetylene black, furnace black, Ketjen black, or mixtures thereof.

**15.** A process for producing a carbonaceous particulate material according to any one of claims 1 to 4, comprising a thermal-oxidative decomposition by feeding hydrocarbons with high degree of aromaticity together with sub-stoichiometric amounts of air, $CO_2$, and/or steam into a reactor, thereby causing the decomposition of the gasified hydrocarbons at a temperature of between about 1000°C and about 1600°C.

**Figure 1**

**Figure 2**

EP 4 516 735 A1

**Figure 3**

19

| | Europäisches Patentamt European Patent Office Office européen des brevets | **EUROPEAN SEARCH REPORT** | Application Number EP 23 30 6432 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/071168 A1 (MATYJASZEWSKI KRZYSZTOF [US] ET AL) 5 March 2020 (2020-03-05) * abstract * * claims 1-30 * * table 1 * | 1-4 | INV. C01B32/05 H01M4/62 H01M10/0525 |
| X | US 10 870 761 B2 (IMERYS GRAPHITE & CARBON SWITZERLAND LTD [CH]; IMERTECH SAS [FR]) 22 December 2020 (2020-12-22) * abstract * * column 1 * * claims 1-21 * * example 1 * | 1-9,15 | |
| X | WO 2018/229220 A1 (IMERYS GRAPHITE & CARBON SWITZERLAND LTD [CH] ET AL.) 20 December 2018 (2018-12-20) * abstract * * claims 1-15 * * example 1 * | 1-9 | |
| X | US 2016/002044 A1 (GHOSH ARUNABHA [SG] ET AL) 7 January 2016 (2016-01-07) * abstract * * claims 1-20 * * tables 1,2 * | 1-4 | TECHNICAL FIELDS SEARCHED (IPC) C01B H01M |
| X | US 2009/208751 A1 (GREEN MARTIN C [US] ET AL) 20 August 2009 (2009-08-20) * abstract * * claims 1-39 * * paragraphs [0040], [0106] * | 1-4,10, 11 | |
| X | US 2009/208780 A1 (SUN YIPENG [US] ET AL) 20 August 2009 (2009-08-20) * abstract * * claims 1-52 * * example 3 * | 1-4, 12-14 | |

The present search report has been drawn up for all claims

| Place of search | Date of completion of the search | Examiner |
|---|---|---|
| The Hague | 15 February 2024 | Mertins, Frédéric |

## ANNEX TO THE EUROPEAN SEARCH REPORT
## ON EUROPEAN PATENT APPLICATION NO.

EP 23 30 6432

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2024

| Patent document cited in search report | | Publication date | Patent family member(s) | | Publication date |
|---|---|---|---|---|---|
| US 2020071168 | A1 | 05-03-2020 | US | 2020071168 A1 | 05-03-2020 |
| | | | US | 2023049990 A1 | 16-02-2023 |
| US 10870761 | B2 | 22-12-2020 | CN | 107820504 A | 20-03-2018 |
| | | | EP | 3298082 A1 | 28-03-2018 |
| | | | HU | E047527 T2 | 28-04-2020 |
| | | | JP | 7053270 B2 | 12-04-2022 |
| | | | JP | 2018522977 A | 16-08-2018 |
| | | | KR | 20180027438 A | 14-03-2018 |
| | | | PL | 3298082 T3 | 30-04-2020 |
| | | | US | 2018155552 A1 | 07-06-2018 |
| | | | WO | 2017005921 A1 | 12-01-2017 |
| WO 2018229220 | A1 | 20-12-2018 | NONE | | |
| US 2016002044 | A1 | 07-01-2016 | SG | 10201505268U A | 26-02-2016 |
| | | | US | 2016002044 A1 | 07-01-2016 |
| | | | US | 2017297923 A1 | 19-10-2017 |
| US 2009208751 | A1 | 20-08-2009 | CA | 2715309 A1 | 27-08-2009 |
| | | | CN | 102007186 A | 06-04-2011 |
| | | | EP | 2257602 A2 | 08-12-2010 |
| | | | EP | 3287496 A1 | 28-02-2018 |
| | | | JP | 6230524 B2 | 15-11-2017 |
| | | | JP | 2011515507 A | 19-05-2011 |
| | | | JP | 2015071784 A | 16-04-2015 |
| | | | JP | 2017052967 A | 16-03-2017 |
| | | | KR | 20100116623 A | 01-11-2010 |
| | | | KR | 20150117706 A | 20-10-2015 |
| | | | KR | 20180000343 A | 02-01-2018 |
| | | | TW | 200946603 A | 16-11-2009 |
| | | | US | 2009208751 A1 | 20-08-2009 |
| | | | WO | 2009105172 A2 | 27-08-2009 |
| US 2009208780 | A1 | 20-08-2009 | CA | 2715150 A1 | 27-08-2009 |
| | | | CN | 102007629 A | 06-04-2011 |
| | | | CN | 105047951 A | 11-11-2015 |
| | | | EP | 2255403 A1 | 01-12-2010 |
| | | | EP | 2755266 A1 | 16-07-2014 |
| | | | ES | 2606377 T3 | 23-03-2017 |
| | | | ES | 2679398 T3 | 27-08-2018 |
| | | | JP | 5650542 B2 | 07-01-2015 |
| | | | JP | 5934329 B2 | 15-06-2016 |
| | | | JP | 2011514304 A | 06-05-2011 |
| | | | JP | 2015042614 A | 05-03-2015 |
| | | | KR | 20100122082 A | 19-11-2010 |

EPO FORM P0459

For more details about this annex : see Official Journal of the European Patent Office, No. 12/82

page 1 of 2

EP 4 516 735 A1

**ANNEX TO THE EUROPEAN SEARCH REPORT
ON EUROPEAN PATENT APPLICATION NO.**

EP 23 30 6432

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2024

| Patent document cited in search report | Publication date | Patent family member(s) | | Publication date |
|---|---|---|---|---|
| | | US | 2009208780 A1 | 20-08-2009 |
| | | US | 2015210550 A1 | 30-07-2015 |
| | | WO | 2009105076 A1 | 27-08-2009 |

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013045894 A
- US 9017837 B2

**Non-patent literature cited in the description**

- *PAC*, 1972, vol. 31 (577), 585-586
- **BRUNAUER** ; **EMMET** ; **TELLER**. Adsorption of Gases in Multi-molecular Layers. *J. Am. Chem. Soc.*, 1938, vol. 60, 309-319
- **RAVIKOVITCH, P.** ; **VISHNYAKOV, A.** ; **RUSSO, R.** ; **NEINARK, A**. *Langmuir*, 2000, vol. 16, 2311-2320
- **JAGIELLO, J.** ; **THOMMES, M.** *Carbon*, 2004, vol. 42, 1227-1232
- **BARRETT, E.P.** ; **JOYNER, L.G.** ; **HALENDA, P.P.** *Journal of the American Chemical Society*, 1951, vol. 73, 373-380
- **HARKINS, W.D.** ; **JURA, G.** *J. Chem. Phys.*, 1943, vol. 11, 430